# EUROPEAN PATENT SPECIFICATION

(11) **EP 0 481 714 B1**
(45) Date of publication and mention of the grant of the patent: **02.01.1997**
(21) Application number: 91309459.5
(22) Date of filing: 15.10.1991
(51) Int. Cl.: H04Q 7/20, H04B 7/26, G07F 7/10

(54) **Identification of subscribers in a cellular telephone network**
Identifizierung von Teilnehmern in einem zellularen Telefonnetzwerk
Identification d'abonnés dans un réseau télephonique cellulaire

(30) Priority: 17.10.1990 GB 9022498
(43) Date of publication of application: 22.04.1992
(73) Proprietor: VODAFONE LIMITED, Newbury, Berkshire RG13 1JL (GB)
(72) Inventor: Sommerville, Iain Douglas, Maidenhead, Berkshire, SL6 1SY (GB)
(74) Representative: Foster, David Martyn

(56) References cited:
- EP-A- 0 048 868
- EP-A- 0 239 503
- EP-A- 0 467 534
- NTZ NACHRICHTENTECHNISCHE ZEITSCHRIFT vol. 43, no. 4, April 1990, BERLIN DE pages 230 - 236 , XP000116419 FUHRMANN 'Intelligente Vermittlungsfunktionen für Mobilkommunikationsnetze - Teil 1' & NTZ NACHRICHTENTECHNISCHE ZEITSCHRIFT vol. 43, no. 5, May 1990, bERLIN DE pages 380 - 385, XP000126246 FUHRMANN 'Intelligente Vermittlungsfunktionen für Mobilkommunikationsnetze - Teil 2'
- TELCOM REPORT vol. 13, no. 1, January 1990, M]NCHEN DE pages 32 - 34 , XP000127515 WURZER 'Telefonzelle mit Intelligenz'

## Description

The invention relates to telecommunications networks by means of which a plurality of subscribers may communicate with each other. Embodiments of the invention to be described in more detail below comprise such telecommunications networks in the form of telephone networks and more especially such networks involving mobiles (such as in a cellular network) which can communicate with each other and with fixed telephones via a public switched telephone network (PSTN). One such telephone network is the planned Pan-European digital telephone network (the "GSM" network).

In the embodiments of the invention to be described, subscribers intending to communicate via mobiles will be issued with tokens by which they can identify themselves when making a call via the system network, such tokens being, for example, in the form of so-called "smartcards". Such smartcards carry data such as identification numbers and other information to ensure the security of the system. Such telecommunication systems are already disclosed in the document 'NTZ Nachrichtentechnische Zeitschrift', vol. 43, no. 5, May 1990 (pages 380-385). From time to time, existing subscribers will be issued with replacement smartcards, to replace those lost, damaged or worn by reason of age or use. When a subscriber receives such a replacement smartcard, it is desirable that he can commence using it immediately if he so wishes. It is therefore desirable that the network is able to recognise use of a replacement smartcard and to react accordingly.

According to the invention, there is provided a telecommunications network by means of which a plurality of subscribers can communicate with each other, the subscriber having respective tokens by means of which they can respectively identify themselves to the network, each token causing a unique identification number to be input into the network, comprising main storage means having a plurality of storage locations each for storing a respective one of the identification numbers and an access number corresponding to the subscriber who has the token associated with that identification number and by which the subscriber may be accessed via the network, a plurality of subsidiary storage means, accessing means associated with each subsidiary storage means and responsive to an identification number input into the system to check whether data relating to it is present in the subsidiary storage means and, if it is not, for accessing the said data in the main storage means and recording it and the corresponding access number in the subsidiary storage means, and further storage means associated with the main storage means for storing therein identification numbers corresponding to tokens issued to the subscribers for respectively replacing their existing tokens, whereby the accessing means responds to the input of an identification number corresponding to a replacement token not previously used by accessing the corresponding identification number from the further storage means of the main storage means and recording it and the corresponding access number in the subsidiary storage means.

According to the invention, there is further provided a method of operating a cellular telephone network in which the subscribers respectively identify themselves to the network by means of smartcards which carry respective subscriber identification numbers to be input into the network via the relevant cells thereof, the identification numbers having a random relationship with the respective subscribers' telephone numbers, comprising the steps of setting up, in a home location register, storage locations for each telephone number each of which locations also stores the corresponding subscriber identification number and other subscriber data, responding to an identification number input at a particular cell by searching for that identification number in a visitor location register associated with that cell, responding to absence of that identification number from that visitor location register by accessing the storage location of that subscriber identification number in the home location register and obtaining the subscriber's telephone number therefrom and recording that number and the corresponding subscriber identification number in the visitor location register, storing in a special location in the home location register the subscriber identification number carried by a replacement smartcard issued to an existing subscriber and storing in association therewith the subscriber identification number of the smartcard previously issued to that subscriber, responding to the first input of the identification number carried by the replacement card by searching the visitor location register corresponding to the particular cell at which that input occurs, noting absence from that register of that subscriber identification number, accessing the special location in the home location register to obtain the subscriber identification number corresponding to that subscriber's previous smartcard, recording in the visitor location register the subscriber identification number of the replacement smartcard and the subscriber identification number corresponding to that subscriber, and substituting in the home location register the subscriber identification number of the replacement card for the subscriber identification number of the previous smartcard and cancelling storage of the latter number.

Part of a cellular telephone network, such as the proposed GSM system, embodying the invention will now be described, by way of example only, with reference to the accompanying diagrammatic drawing which is a block diagram of part of the network.

The network being described is cellular in operation. Communication to and from mobiles in the network is by radio link between them and respective base stations, each base station defining a cell of the network. When a mobile is activated, this is signalled to the base station of the cell in which the mobile is currently located and the network identifies the mobile and records its current location, updating this information as the mobile moves. A mobile can initiate a call via its base station and the network to another mobile or, via the PSTN (to which the network is connected) to a fixed subscriber to the PSTN. Similarly, calls can be made to the mobile via the network from other mobiles or from fixed subscribers to the PSTN.

In order to enable such calls to be made and received, and for call charges to be successfully billed to mobile subscribers, it is clearly vital that a proper arrangement be incorporated for identifying subscribers and ensuring so far as possible that only properly authorised subscribers can initiate calls from particular mobiles.

As a means of achieving these aims, the system provides each subscriber with a smartcard. The smartcard is pre-programmed with a variety of information. In particular, it has a serial number and a unique identification number, the "International Mobile Subscriber Identity" (IMSI) which is kept secure, that is, it is not visible on the card and is not known to the subscriber. The card also carries security data by means of which the network checks (in a manner to be explained) that the smartcard is genuine.

Each subscriber will also be issued with a publicly known number, the MSISDN ("Mobile Station International ISDN Number"). This is the subscriber's telephone number by means of which calls to that subscriber are initiated by other subscribers to the system and to the PSTN.

In order to activate a mobile in the network (so that it may make or receive calls), the subscriber has to place his smartcard in a card reader at the mobile telephone and, optionally enter an identification number (PIN). Provided that the entered PIN is found to be correct for that particular smartcard, the mobile transmits the IMSI (read from the card) to the appropriate base station. As will be described, the network then carries out a check on the security data on the card and provided this check is satisfactory accesses the MSISDN and subscription data appropriate to the card's IMSI and records the location of the particular mobile.

The MSISDN for that particular subscriber is not recorded on the smartcard. It is therefore necessary, in a manner to be explained, for the system to store the MSISDN associated with the IMSI on that subscriber's smartcard so that, for example, an incoming call for the particular mobile (which the caller will initiate using the called subscriber's MSISDN) can be correctly routed.

Smartcards will be subject to wear through damage or effluxion of time and arrangements will therefore be made for automatically issuing each subscriber with a replacement smartcard every, say, two years. A subscriber may also be issued with a replacement smartcard in the event of loss or damage to his card or for other reasons. Each smartcard will have a different IMSI; in particular, a replacement smartcard issued to a subscriber will have a different IMSI from that of the previous smartcard.

For efficient and convenient use of the network, it is desirable that the subscriber can immediately start using his replacement smartcard. The network must therefore be able to recognise when a replacement smartcard is first used by a particular subscriber and to respond to this by checking its security data, reacting to its new IMSI so as to associate it with the subscriber's (unchanged) MSISDN, and ensuring that the smartcard previously used by that subscriber will no longer be valid.

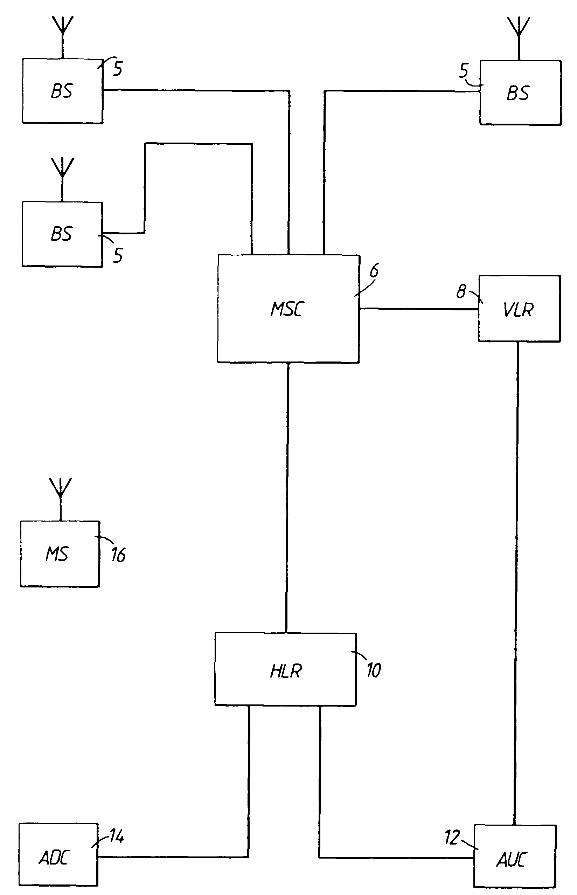

The Figure shows part of the network in simplified form. As shown, there is a plurality of base stations (BS) 5, each serving a particular geographical location or cell. A mobile switching centre (MSC) 6 is connected to a group of the base stations 5 via wire connections, each MSC serving some, only, of the base stations within the total network. Each MSC has associated with it a visitor location register (VLR) 8 to which it is connected by a wired connection. In addition, the system contains a "Home Location Register" (HLR) 10.

The HLR comprises fixed data storage having a separate storage location for each subscriber. Within each such location is stored the MSISDN for the subscriber and the associated IMSI (that is, the IMSI for the currently active smartcard), together with other data.

The HLR 10 has associated with it an authentication centre (AUC) 12. The AUC 12 is concerned with the process of security-checking the security data on each smartcard input into the system. Information corresponding to this security data is held in the AUC for each of the smartcards.

The subscriber data contained in the HLR is managed by an administration centre (ADC) 14.

When a mobile subscriber (MS), as indicated diagrammatically at 16, is activated, by insertion of the subscriber's smartcard, the card is read and its IMSI and other data read from the card are signalled, by radio, to the MSC 6. The MSC 6 responds to the IMSI by checking the VLR 8 for any corresponding data. It may well be the case that no such corresponding data is found in the VLR. For example, the mobile 16 may be temporarily located in a location remote from its usual area of movement (it may for instance be in different country from its home country). Therefore, the MSC 6 has to refer to the HLR 10 in order to obtain information concerning the subscriber. Here, it will find data correlating the IMSI with the MSISDN of that subscriber and this information is transferred to the VLR 8 (but maintained in the HLR 10 as well). Before such transfer takes place, however, the smartcard has to be authenticated using the security data read from it. This security data is checked using a challenge and response routine. Using the IMSI, the VLR obtains "challenge and response" data from the AUC12 and initiates a "challenge" to the smartcard. If the smartcard issues the correct response, as verified by the VLR, this authenticates the smartcard and permits the transfer to the VLR of the MSISDN and subscription data appropriate to the card's IMSI. The VLR also performs a location up-dating procedure, informing the HLR of the mobile's current location.

The foregoing procedure requires the VLR 8 to be able to access the correct location in the HLR 10. A method by which this can be carried out is disclosed in our co-pending United Kingdom Patent Application No. 9015938.

If the same subscriber subsequently activates his mobile within the location area of the VLR 8, the foregoing procedure is simplified in that information relating to that subscriber, in particular, his MSISDN and associated IMSI, is already stored in the VLR and does not have to be accessed from the HLR.

When a replacement smartcard is issued for that subscriber, the ADC 14 enters certain information into a special location in the HLR 10. Specifically, it enters the IMSI of the replacement smartcard, and the IMSI of the card which it replaces. Information relating to the corresponding MSISDN is not stored in this location. Appropriate information for authenticating the security data of the replacement smartcard, is entered in the AUC 12.

When the subscriber activates his mobile using the replacement smartcard, the IMSI of the replacement card will be transmitted to the MSC and the VLR. The authentication procedure then takes place, in which the replacement smartcard is checked for authenticity by means of the security data which it stores and in conjunction with security data stored by the AUC 12 for the replacement card. Assuming that authentication is substantiated, the VLR is then up-dated with information relating to the IMSI of the replacement card. However, because a replacement smartcard is being used, then, by definition, there will be no data present in the VLR 8. The VLR will therefore react in the same manner as it does on other occasions when a mobile attempting to register with it inputs an IMSI which is not contained in the VLR. In other words, the VLR requests the appropriate information from the HLR 10.

In response to the request, the HLR will have to access the special location, because this is the only location in the HLR where the new IMSI can be found. In response to this, the HLR will recognise that activation of the replacement card has taken place and will respond in a number of ways:-
(a) It will delete the IMSI value for the previous card from the main part of the HLR (where it is correlated with the MSISDN and subscription data) and insert the IMSI value for the replacement card.
(b) It will inform the ADC14.
(c) If any VLR is already storing information relating to the IMSI of the original smartcard, this fact will be known at the HLR as will the identity of that VLR; the HLR will act to cancel the VLR data based on that IMSI.
(d) It will then cancel the entry in the special location.

The network then proceeds in the manner described above for the IMSI of the original card.

The foregoing procedure is advantageous in that it relies, at least in part, on the existing procedure by which a VLR obtains information from the HLR relating to a smartcard not previously recognised. Furthermore, the procedure requires the active participation of the replacement smartcard. This is advantageous because it checks the replacement smartcard for any faults. If there are faults in the replacement smartcard, it is likely that the procedure will not be able to be carried out satisfactorily. In such a case, it may be appropriate for the original smartcard to be re-activated. However, this should be done manually rather than through any inter-action through the network - in order to avoid the possibility that two smartcards for the same MSISDN might be validated at the same time.

## Claims

1. A telecommunications network by means of which a plurality of subscribers can communicate with each other, and in which network the subscribers (e.g. 16) have respective tokens by means of which they can respectively identify themselves to the network, each token causing a unique identification number (IMSI) to be input into the network,
and which network includes main storage means (HLR10) having a plurality of storage locations each for storing a respective one of the identification numbers (IMSI) and an access number (MSISDN) corresponding to the subscriber who has the token associated with that identification number (IMSI) and by which the subscriber may be accessed via the network,
and further includes a plurality of subsidiary storage means (VLR8), accessing means (MSC6) associated with each subsidiary storage means (VLR8) and responsive to an identification number (IMSI) input into the system to check whether data relating to it is present in the subsidiary storage means (VLR8) and, if it is not, for accessing the said data in the main storage means (HLR10) and recording it and the corresponding access number (MSISDN) in the subsidiary storage means (VLR8),
said network being characterised by further storage means associated with the main storage means (HLR10) for storing therein identification numbers (IMSI) corresponding to tokens issued to the subscribers for respectively replacing their existing tokens, whereby the accessing means (MSC6) responds to the input of an identification number (IMSI) corresponding to a replacement token not previously used by accessing the corresponding identification number (IMSI) from the further storage means of the main storage means (HLR10) and recording it and the corresponding access number in the subsidiary storage means (VLR8).

2. A network according to claim 1, characterised by control means responsive to the input of an identification number (IMSI) corresponding to a replacement token not previously used for noting use of the replacement token and deleting the identification number (IMSI) of the replaced token from the main storage means (HLR10) and any subsidiary storage means (VLR8) where it is stored.

3. A network according to claim 1 or 2, characterised in that the further storage means stores the identification number (IMSI) corresponding to the replacement token in association with the identification number (IMSI) of the previous token, whereby to enable the accessing means (MSC6) to access the part of the main storage means (HLR10) storing the access number (MSISDN) corresponding to the relevant subscriber.

4. A network according to any preceding claim, characterised in that each token carries security data, and in that corresponding security data associated with the identification number (IMSI) of that token is stored in the main storage means (HLR10), and the accessing means (MSC6) uses the security data to authenticate each token.

5. A network according to any preceding claim, characterised in that each token is a smartcard.

6. A network according to any preceding claim, characterised in that it is in the form of a cellular telephone network for mobile subscribers (MS) and in that the access numbers (MSISDN) are the subscribers' telephone numbers.

7. A network according to claim 6, characterised in that each subsidiary storage means is a visitor location register (VLR8) associated with one or some of the cells of the network, and in that the main storage means comprises a home location register (HLR10) for at least part of the network.

8. A method of operating a cellular telephone network, in which the subscribers respectively identify themselves to the network by means of smartcards which carry respective subscriber identification numbers (IMSI) to be input into the network via the relevant cells thereof, the identification numbers having a random relationship with the respective subscribers' telephone numbers (MSISDN),
said method including the steps of
setting up, in a home location register (HLR10), storage locations for each telephone number each of which locations also stores the corresponding subscriber identification number (IMSI) and other subscriber data,
responding to an identification number (IMSI) input at a particular cell by searching for that identification number (IMSI) in a visitor location register (VLR8) associated with that cell,
responding to absence of that identification number (IMSI) from that visitor location register (VLR8) by accessing the storage location of that subscriber identification number (IMSI) in the home location register (HLR10) and obtaining the subscriber's telephone number therefrom and recording that number and the corresponding subscriber identification number (IMSI) in the visitor location register (VLR8),
said method being characterised by the steps of
storing in a special location in the home location register (HLR10) the subscriber identification number (IMSI) carried by a replacement smartcard issued to an existing subscriber and storing in association therewith the subscriber identification number (IMSI) of the smartcard previously issued to that subscriber,
responding to the first input of the identification number (IMSI) carried by the replacement card by searching the visitor location register (VLR8) corresponding to the particular cell at which that input occurs,
noting absence from that register (VLR8) of that subscriber identification number (IMSI),
accessing the special location in the home location register (HLR10) to obtain the subscriber identification number (IMSI) corresponding to that subscriber's previous smartcard,
recording in the visitor location register (VLR8) the subscriber identification number (IMSI) of the replacement smartcard and the subscriber identification number (IMSI) corresponding to that subscriber,
and substituting in the home location register (HLR10) the subscriber identification number (IMSI) of the replacement card for the subscriber identification number (IMSI) of the previous smartcard and cancelling storage of the latter number.

9. A method according to claim 8, characterised by the step of storing at the home location register (HLR10) the identity of each visitor location register (VLR8) in which is stored any particular subscriber identification number (IMSI) and the corresponding subscriber's telephone number, and responding to the first input of the subscriber identification number (IMSI) carried by a replacement smartcard by cancelling the storage in each and any visitor location register (VLR8) in which is stored the subscriber identification number (IMSI) of the previous smartcard.

## Patentansprüche

1. Telekommunikationsnetz, mittels dessen eine Mehrzahl von Teilnehmern miteinander kommunizieren kann und in dem die Teilnehmer (z.B. 16) entsprechende Token besitzen, mittels derer sie sich jeweils gegenüber dem Netz identifizieren können, wobei jeder Token die Eingabe einer eindeutigen Identifikationsnummer (IMSI) in das Netz bewirkt,
wobei das Netz Hauptspeichermittel (HLR10) mit einer Mehrzahl von Speicherstellen zur jeweiligen Speicherung einer entsprechenden der Identifikationsnummern (IMSI) und einer Zugangsnummer (MSISDN), die dem Teilnehmer entspricht, der den mit dieser Identifikationsnummer (IMSI) verbundenen Token besitzt und über die über das Netz auf den Teilnehmer zugegriffen werden kann, umfaßt,
und weiterhin mit einer Mehrzahl von untergeordneten Speichermitteln (VLR8), mit jedem untergeordneten Speichermittel (VLR8) verbundenen Zugriffsmitteln (MSC6), die auf eine in das System eingegebene Identifikationsnummer (IMSI) reagieren, um zu überprüfen, ob diesbezügliche Daten im untergeordneten Speichermittel (VLR8) vorliegen, und wenn nicht, zum Zugreifen auf die besagten Daten im Hauptspeichermittel (HLR10) und Aufzeichnen derselben und der entsprechenden Zugangsnummer (MSISDN) im untergeordneten Speichermittel (VLR8),
gekennzeichnet durch weitere mit dem Hauptspeichermittel (HLR10) verbundene Speichermittel zum Einspeichern darin von Identifikationsnummern (IMSI), die an die Teilnehmer ausgegebenen Token entsprechen, um jeweils ihre bestehenden Token zu ersetzen, wodurch das Zugangsmittel (MSC6) auf die Eingabe einer einem nicht vorher benutzten Ersatztoken entsprechenden Identifikationsnummer (IMSI) reagiert, indem es auf die entsprechende Identifikationsnummer (IMSI) aus dem weiteren Speichermittel des Hauptspeichermittels (HLR10) zugreift und sie und die entsprechende Zugangsnummer im untergeordneten Speichermittel (VLR8) aufzeichnet.

2. Netz nach Anspruch 1, gekennzeichnet durch Steuermittel, die auf die Eingabe einer Identifikationsnummer (IMSI) reagieren, die einem nicht vorher benutzten Ersatztoken entspricht, um die Verwendung des Ersatztokens anzumerken und die Identifikationsnummer (IMSI) des ersetzten Tokens aus dem Hauptspeichermittel (HLR10) und jeglichem untergeordneten Speichermittel (VLR8), wo es gespeichert ist, zu löschen.

3. Netz nach Anspruch 1 oder 2, dadurch gekennzeichnet, daß das weitere Speichermittel die dem Ersatztoken entsprechende Identifikationsnummer (IMSI) in Verbindung mit der Identifikationsnummer (IMSI) des vorhergehenden Tokens speichert, um dadurch dem Zugangsmittel (MSC6) das Zugreifen auf den Teil des Hauptspeichermittels (HLR10), der die dem entsprechenden Teilnehmer entsprechende Zugangsnummer (MSISDN) speichert, zu ermöglichen.

4. Netz nach einem vorhergehenden Anspruch, dadurch gekennzeichnet, daß jeder Token Sicherheitsdaten führt und daß entsprechende, mit der Identifikationsnummer (IMSI) dieses Tokens verbundene Sicherheitsdaten im Hauptspeichermittel (HLR10) gespeichert werden, und das Zugangsmittel (MSC6) die Sicherheitsdaten zur Authentifikation jedes Tokens benutzt.

5. Netz nach einem vorhergehenden Anspruch, dadurch gekennzeichnet, daß jeder Token eine Chipkarte ist.

6. Netz nach einem vorhergehenden Anspruch, dadurch gekennzeichnet, daß es die Form eines zellularen Fernsprechnetzes für Mobilfunkteilnehmer (MS - mobile subscribers) aufweist und daß die Zugangsnummern (MSISDN) die Rufnummern der Teilnehmer sind.

7. Netz nach Anspruch 6, dadurch gekennzeichnet, daß jedes untergeordnete Speichermittel ein mit einer oder einigen der Zellen des Netzes verbundenes Besuchsregister (VLR8) ist und daß das Hauptspeichermittel ein Heimatregister (HLR10) für mindestens einen Teil des Netzes umfaßt.

8. Verfahren zum Betreiben eines zellularen Fernsprechnetzes, wobei die Teilnehmer sich jeweils dem Netz gegenüber mittels Chipkarten identifizieren, die entsprechende Teilnehmeridentifikationsnummern (IMSI) zur Eingabe in das Netz über dessen entsprechende Zellen führen, wobei die Identifikationsnummern ein zufallsmäßiges Verhältnis zu den entsprechenden Teilnehmerrufnummern (MSISDN) aufweisen,
mit folgenden Schritten:
Einrichten in einem Heimatregister (HLR10) von Speicherstellen für jede Rufnummer, die jeweils auch die entsprechende Teilnehmeridentifikationsnummer (IMSI) und andere Teilnehmerdaten speichern,
Reagieren auf eine in einer bestimmten Zelle eingegebene Identifikationsnummer (IMSI) durch Suchen nach dieser Identifikationsnummer (IMSI) in einem mit dieser Zelle verbundenen Besuchsregister (VLR8),
Reagieren auf die Abwesenheit dieser Identifikationsnummer (IMSI) von diesem Besuchsregister (VLR8) durch Zugreifen auf die Speicherstelle dieser Teilnehmeridentifikationsnummer (IMSI) im Heimatregister (HLR10) und Erlangen der Teilnehmerrufnummer daraus und Aufzeichnen dieser Nummer und der entsprechenden Teilnehmeridentifikationsnummer (IMSI) im Besuchsregister (VLR8),
gekennzeichnet durch folgende Schritte:
Speichern an einer Sonderstelle im Heimatregister (HLR10) der Teilnehmeridentifikationsnummer (IMSI), die von einer an einen bestehenden Teilnehmer ausgegebenen Ersatzchipkarte geführt wird, und Speichern der Teilnehmeridentifikationsnummer (IMSI) der vorher an diesen Teilnehmer ausgegebenen Chipkarte in Verbindung damit,
Reagieren auf die erste Eingabe der von der Ersatzkarte geführten Identifikationsnummer (IMSI) durch Durchsuchen des Besuchsregisters (VLR8), das der bestimmten Zelle, an der diese Eingabe vorkommt, entspricht,
Bemerken der Abwesenheit dieser Teilnehmeridentifikationsnummer (IMSI) von diesem Register (VLR8),
Zugreifen auf die Sonderstelle im Heimatregister (HLR10), um die der vorhergehenden Chipkarte dieses Teilnehmers entsprechende Teilnehmeridentifikationsnummer (IMSI) zu erhalten,
Aufzeichnen der Teilnehmeridentifikationsnummer (IMSI) der Ersatzchipkarte und der diesem Teilnehmer entsprechenden Teilnehmeridentifikationsnummer (IMSI) im Besuchsregister (VLR8),
und Austauschen der Teilnehmeridentifikationsnummer (IMSI) der Ersatzkarte gegen die Teilnehmeridentifikationsnummer (IMSI) der vorherigen Chipkarte und Löschen der Speicherung der letzteren Nummer im Heimatregister (HLR10).

9. Verfahren nach Anspruch 8, gekennzeichnet durch den Schritt des Speicherns, im Heimatregister (HLR10), der Identität jedes Besuchsregisters (VLR8), in dem eine beliebige bestimmte Teilnehmeridentifikationsnummer (IMSI) und die entsprechende Teilnehmerrufnummer gespeichert ist, und Reagieren auf die erste Eingabe der von einer Ersatzchipkarte geführten Teilnehmeridentifikationsnummer (IMSI) durch Löschen der Speicherung in jedem und allen Besuchsregistern (VLR8), in denen die Teilnehmeridentifikationsnummer (IMSI) der vorhergehenden Chipkarte gespeichert ist.

## Revendications

1. Réseau de télécommunications au moyen duquel une pluralité d'abonnés peuvent communiquer les uns avec les autres, et dans lequel réseau les abonnés (p. ex. 16) ont des jetons respectifs au moyen desquels ils peuvent s'identifier respectivement au réseau, chaque jeton entraînant l'entrée d'un numéro d'identification unique (IMSI) dans le réseau,
lequel réseau comporte un moyen de mémorisation principal (HLR10) ayant une pluralité d'emplacements mémoire pour mémoriser chacun un numéro respectif des numéros d'identification (IMSI) et un numéro d'accès (MSISDN) correspondant à l'abonné qui a le jeton associé à ce numéro d'identification (IMSI) et par lequel l'abonné peut être contacté par l'intermédiaire du réseau,
et comporte en outre une pluralité de moyens de mémorisation affiliés (VLR8), un moyen d'accès (MSC6) étant associé à chaque moyen de mémorisation affilié (VLR8) et sensible à un numéro d'identification (IMSI) entré dans le système pour vérifier si les données s'y rapportant sont présentes dans le moyen de mémorisation affilié (VLR8) et, si elles ne le sont pas, pour solliciter lesdites données dans le moyen de mémorisation principal (HLR10) et les enregistrer ainsi que le numéro d'accès correspondant (MSISDN) dans le moyen de mémorisation affilié (VLR8),
ledit réseau étant caractérisé par un moyen de mémorisation complémentaire associé au moyen de mémorisation principal (HLR10) pour y mémoriser les numéros d'identification (IMSI) correspondant aux jetons remis aux abonnés pour remplacer respectivement leurs jetons existants, de manière à ce que le moyen d'accès (MSC6) réponde à l'entrée d'un numéro d'identification (IMSI) correspondant à un jeton de remplacement inutilisé précédemment en sollicitant le numéro d'identification correspondant (IMSI) à partir du moyen de mémorisation complémentaire du moyen de mémorisation principal (HLR10) et en l'enregistrant ainsi que le numéro d'accès correspondant dans le moyen de mémorisation affilié (VLR8).

2. Réseau conformément à la revendication 1, caractérisé par un moyen de commande sensible à l'entrée d'un numéro d'identification (IMSI) correspondant à un jeton de remplacement inutilisé précédemment pour consigner l'utilisation du jeton de remplacement et effacer le numéro d'identification (IMSI) du jeton remplacé du moyen de mémorisation principal (HLR10) et de tout moyen de mémorisation affilié (VLR8) où il est mémorisé.

3. Réseau conformément à la revendication 1 ou 2, caractérisé en ce que le moyen de mémorisation complémentaire mémorise le numéro d'identification (IMSI) correspondant au jeton de remplacement en association avec le numéro d'identification (IMSI) du jeton précédent, de manière à permettre au moyen d'accès (MSC6) de solliciter la partie du moyen de mémorisation principal (HRL10) qui mémorise le numéro d'accès (MSISDN) correspondant à l'abonné pertinent.

4. Réseau conformément à l'une quelconque des revendications précédentes, caractérisé en ce que chaque jeton porte des données de sécurité, et en ce que les données de sécurité correspondantes associées au numéro d'identification (IMSI) de ce jeton sont mémorisées dans le moyen de mémorisation principal (HLR10), et le moyen d'accès (MSC6) utilise les données de sécurité pour authentifier chaque jeton.

5. Réseau conformément à l'une quelconque des revendications précédentes, caractérisé en ce que chaque jeton est une carte intelligente.

6. Réseau conformément à l'une quelconque des revendications précédentes, caractérisé en ce qu'il a la forme d'un réseau téléphonique cellulaire pour abonnés mobiles (MS) et en ce que les numéros d'accès (MSISDN) sont les numéros de téléphone des abonnés.

7. Réseau conformément à la revendication 6, caractérisé en ce que chaque moyen de mémorisation affilié est un registre d'emplacements de visiteurs (VLR8) associé à une ou plusieurs cellules du réseau, et en ce que le moyen de mémorisation principal comprend un registre d'emplacements domestiques (HLR10) pour au moins une partie du réseau.

8. Procédé de fonctionnement d'un réseau téléphonique cellulaire, dans lequel les abonnés s'identifient respectivement au réseau au moyen de cartes intelligentes qui portent les numéros d'identification des abonnés respectifs (IMSI) devant être entrés dans le réseau par le biais des cellules pertinentes de celui-ci, les numéros d'identification ayant une relation aléatoire avec les numéros de téléphone des abonnées respectifs (MSISDN),
ledit procédé comportant les étapes
d'établissement, dans un registre d'emplacements domestiques (HLR10), d'emplacements mémoire pour chaque numéro de téléphone, chacun de ces emplacements mémorisant également le numéro d'identification d'abonné correspondant (IMSI) et d'autres données d'abonné,
de réponse à un numéro d'identification (IMSI) entré au niveau d'une cellule particulière en recherchant ce numéro d'identification (IMSI) dans un registre d'emplacements de visiteurs (VLR8) associé à cette cellule,
de réponse à l'absence de ce numéro d'identification (IMSI) dans ce registre d'emplacements de visiteurs (VLR8) en sollicitant l'emplacement mémoire de ce numéro d'identification d'abonné (IMSI) dans le registre d,emplacements domestiques (HLR10) et en obtenant de celui-ci le numéro de téléphone de l'abonné et en enregistrant ce numéro et le numéro d'identification d'abonné correspondant (IMSI) dans le registre d'emplacements de visiteurs (VLR8),
ledit procédé étant caractérisé par les étapes
de mémorisation dans un emplacement spécial dans le registre d'emplacements domestiques (HLR10) du numéro d'identification d'abonné (IMSI) porté par une carte intelligente de remplacement remise à un abonné existant et de mémorisation en association à celui-ci du numéro d'identification d'abonné (IMSI) de la carte intelligente précédemment remise à cet abonné,
de réponse à la première entrée du numéro d'identification (IMSI) porté par la carte de remplacement en consultant le registre d'emplacements de visiteurs (VLR8) correspondant à la cellule particulière au niveau de laquelle cette entrée se produit,
de consignation de l'absence dans ce registre (VLR8) de ce numéro d'identification d'abonné (IMSI),
de sollicitation de l'emplacement spécial dans le registre d'emplacements domestiques (HLR10) pour obtenir le numéro d'identification d'abonné (IMSI) correspondant à la carte intelligente précédente de cet abonné,
d'enregistrement dans le registre d'emplacements de visiteurs (VLR8) du numéro d'identification d'abonné (IMSI) de la carte intelligente de remplacement et du numéro d'identification d'abonné (IMSI) correspondant à cet abonné,
et de substitution dans le registre d'emplacements domestiques (HLR10) du numéro d'identification d'abonné (IMSI) de la carte de remplacement au numéro d'identification d'abonné (IMSI) de la carte intelligente précédente et d'annulation de la mémorisation de ce dernier numéro.

9. Procédé conformément à la revendication 8, caractérisé par l'étape de mémorisation au niveau du registre d'emplacements domestiques (HLR10) de l'identité de chaque registre d'emplacements de visiteurs (VLR8) dans lequel est mémorisé tout numéro d'identification d'abonné particulier (IMSI) et le numéro de téléphone de l'abonné correspondant, et de réponse à la première entrée du numéro d'identification d'abonné (IMSI) porté par une carte intelligente de remplacement en annulant la mémorisation dans chaque et tout registre d'emplacements de visiteurs (VLR8) dans lequel est mémorisé le numéro d'identification d'abonné (IMSI) de la carte intelligente précédente.
